(19) Europäisches Patentamt
European Patent Office
Office européen des brevets

(11) Veröffentlichungsnummer: **0 004 533**
**A2**

(12) # EUROPÄISCHE PATENTANMELDUNG

(21) Anmeldenummer: 79100142.3

(22) Anmeldetag: 18.01.79

(51) Int. Cl.²: C 08 F 10/00
C 08 F 4/62

(30) Priorität: 23.01.78 DE 2802763

(43) Veröffentlichungstag der Anmeldung: 17.10.79 Patentblatt 79/21

(84) Benannte Vertragsstaaten: BE DE FR GB IT NL

(71) Anmelder: HOECHST AKTIENGESELLSCHAFT
Zentrale Patentabteilung Postfach 80 03 20
D-6230 Frankfurt/Main 80(DE)

(72) Erfinder: Gutweiler, Klemens, Dr.
Hartemussweg 10
D-6272 Niedernhausen/Taunus(DE)

(54) **Katalysator, Verfahren zu seiner Herstellung und seine Verwendung zum Polymerisieren von 1-Olefinen.**

(57) Durch Umsetzen eines auf einem Siliciumdioxid enthaltenden Träger fixierten Chromatesters mit einer aluminiumorganischen Verbindung in Abwesenheit eines ungesättigten pomyerisierbaren Kohlenwasserstoffs und nachfolgendes Aktivieren mit weiterer aluminiumorganischer Verbindung erhält man einen Katalysator für die Polymerisation von 1-Olefinen. Bei der Umsetzung fallen keine Waschflüssigkeiten an, die wieder aufbereitet werden müßten. Der Katalysator liefert ein Polymeres mit breiter Molgewichtsverteilung in hoher Ausbeute, welches wenig hochmwlekulare Anteile enthält, so daß die aus diesem Polymeren hergestellten Folien praktisch stippenfrei sind.

EP 0 004 533 A2

HOECHST AKTIENGESELLSCHAFT HOE 78/F 011 Dr.DA/St

**Katalysator, Verfahren zu seiner Herstellung und seine Verwendung zum Polymerisieren von 1-Olefinen**

Die Erfindung betrifft ein Verfahren zur Herstellung eines Mischkatalysators vom Ziegler-Typ und den nach diesem Verfahren hergestellten Katalysators.

Es ist ein Verfahren zum Polymerisieren von 1-Olefinen bekannt, bei welchem ein Katalysator verwendet wird, der aus einem auf einem Träger fixierten Chromatester und einer aluminiumorganischen Verbindung besteht (vgl. DE-OS 2 000 031, DT-OS 1 745 184). Die nach diesem Verfahren erzielbaren Ausbeuten reichen jedoch noch nicht aus, um das Polymere ohne Entfernung der Katalysatorreste weiterverarbeiten zu können.

Weiterhin ist ein Verfahren zur Polymerisation von Ethylen beschrieben worden, bei welchem der Katalysator aus einem auf einem $SiO_2$-Träger niedergeschlagenen und mit einer Phenolverbindung behandelten Chromatester und einem starken Reduktionsmittel besteht (vgl. DE-OS 2 713 877). Obwohl durch die Phenolbehandlung die Ausbeute gesteigert wird, ist sie dennoch nicht ausreichend für ein Polymerisationsverfahren ohne Katalysatorentfernung aus dem Polymer.

Es wurde nun gefunden, daß sehr hohe Ausbeuten an Polymer erhalten werden, wenn man einen Katalysator verwendet, zu dessen Herstellung man einen Chromatester auf einem Träger fixiert, mit einer aluminiumorganischen Verbindung in Abwesenheit von polymerisierbaren Kohlenwasserstoffen vorbehandelt und bei der Polymerisation mit weiterer aluminiumorganischer Verbindung aktiviert.

Unmittelbarer Gegenstand der Erfindung ist somit ein Verfahren zur Herstellung eines Katalysators durch Aufbringen eines Chromatesters auf einen Siliciumdioxid enthaltenden Träger, Behandeln der auf dem Träger fixierten Chromverbindung mit einer reduzierenden Verbindung und Mischen des Reaktionsproduktes (Komponente A) mit einer aluminiumorganischen Verbindung (Komponente B), dadurch gekennzeichnet daß man zur Herstellung der Komponente A einen Chromatester der Formel $(RO)_2CrO_2$, worin R eine tertiäre Alkyl- oder Aralkylgruppe mit 4 bis 24 Kohlenstoffatomen bedeutet, auf ein Oxid oder Mischoxid des Siliciums und/oder Aluminiums aufbringt und in Abwesenheit eines ungesättigten polymerisierbaren Kohlenwasserstoffs mit einer Verbindung der Gruppe der Aluminiumtrialkyle, Aluminiumdialkylhydride, Aluminiumdialkylalkoxide, Umsetzungsprodukte von Aluminiumtrialkylen oder Aluminiumdialkylhydriden mit Dienen sowie Poly-alkylaluminiumoxide im Verhältnis Cr:Al von 1:1 bis 1:50 behandelt.

Weiterhin ist unmittelbarer Gegenstand der Erfindung der nach diesem Verfahren hergestellte Katalysator und seine Verwendung zum Polymerisieren von 1-Olefinen.

Zur Herstellung der Katalysatorkomponente A wird zunächst ein Chromatester auf einem Träger fixiert.

Geeignete Chromatester sind solche der Formel

$$(RO)_2CrO_2,$$

worin R eine tertiäre Alkyl- oder Aralkylgruppe mit 4 bis 24, vorzugsweise 4 bis 19 Kohlenstoffatomen bedeutet. Die Chromatester entstehen in an sich bekannter Weise durch Umsetzung eines tertiären Alkohols der Formel

$$R^1R^2R^3COH,$$

worin $R^1$, $R^2$ und $R^3$ gleiche oder verschiedene Alkylreste mit 1 bis 15 Kohlenstoffatomen oder Arylreste mit 6 bis 10 Kohlenstoffatomen bedeuten, mit $CrO_3$ in einem inerten Lösungsmittel in Gegenwart eines wasserbindenden Mittels. Als Alkohole kommen infrage unter anderem t-Butanol, 2-Methyl-2-butanol, t-Hexanol, Dimethylpentadecylcarbinol, Triphenylcarbinol. Besonders bevorzugt wird t-Butanol verwendet. Das Mol-Verhältnis $CrO_3$ zu Alkohol beträgt 1:1 bis 10:1, vorzugsweise 2:1 bis 4:1.

Als Lösungsmittel eignen sich alle für die Ziegler-Polymerisation verwendbaren Lösungsmittel, so z.B. aliphatische oder cycloaliphatische Kohlenwasserstoffe, beispielsweise Pentan, Hexan, Heptan, Cyclohexan, Methylcyclohexan, aromatische Kohlenwasserstoffe wie Benzol, Toluol, Xylol oder Benzin- bzw. hydrierte Dieselölfraktionen, welche sorgfältig von Sauerstoff, Schwefelverbindungen und Feuchtigkeit befreit worden sind. Bevorzugt werden aliphatische und cycloaliphatische Kohlenwasserstoffe verwendet.

Die Konzentration des $CrO_3$ in der Lösung beträgt zweckmäßigerweise bis 30 mMol, vorzugsweise 5 bis 25 mMol pro Liter. Bei höheren Konzentrationen besteht die Gefahr der Zersetzung und Ausflockung des Chromatesters, insbesondere in Gegenwart von Licht.
Die Umsetzung erfolgt bei einer Temperatur von 0 bis 40°C, vorzugsweise bei 15 bis 25°C und dauert 1 min bis 360 min, je nach Temperatur. Danach wird von dem wasserbindenden Mittel, welches vorzugsweise wasserfreies $MgSO_4$ ist, und überschüssigem $CrO_3$ abfiltriert.
Geeignete Träger sind poröse Oxide oder Mischoxide des Siliciums und/oder Aluminiums, die eine spezifische Oberfläche von 50 bis 1000, vorzugsweise von 100 bis 800, insbesondere von 150 bis 650 $m^2/g$ aufweisen und deren Polyvolumen im Bereich von 0,2 bis 3, vorzugsweise von 0,4 bis 3, insbesondere von 0,6 bis 2,7 ml/g liegt. Die Teilchengröße beträgt 1 bis 500 µm, vorzugsweise 10 bis 200 µm, insbesondere 20 bis 100 µm. Die Hydroxylgruppenzahl liegt,

je nach der spezifischen Oberfläche und der Temperaturvorbehandlung im Bereich von 0,5 bis 50, vorzugsweise von 1 bis 20, insbesondere von 1,5 bis 10 mMol Hydroxylgruppen pro Gramm Träger. Solche Oxide werden teilweise speziell im Hinblick auf eine Verwendung als Träger für Trägerkatalysatoren hergestellt und sind im Handel erhältlich.

Vor der Umsetzung des Trägers mit der Chrom-Verbindung muß durch Trocknen bei einer Temperatur von 120 bis 800°C, vorzugsweise 200 bis 500°C, adsorptiv gebundenes Wasser entfernt werden. Nach der Trocknung wird der Träger unter Luft- und Wasserausschluß unter einem Inertgas, beispielsweise Stickstoff oder Argon, gelagert.

Die Umsetzung des Trägers mit der Chrom-Verbindung erfolgt in der Weise, daß man den Träger in dem inerten Lösungsmittel suspendiert, die gelöste Chrom-Verbindung bei einer Temperatur von 0 bis 40°C, vorzugsweise von 15 bis 25, 1 bis 360 min, vorzugsweise 2 bis 60 min einwirken läßt. Das Verhältnis von Chrom-Verbindung zu Träger wird so gewählt, daß 1 bis 40, vorzugsweise 2 bis 25 mMol Chromatester pro 100 Gramm Träger eingesetzt werden. Dabei zieht die Chrom-Verbindung quantitativ auf den Träger auf. Die Umsetzung ist beendet, wenn nach Absitzen des Trägers in der überstehenden Lösung kein Chrom mehr nachweisbar ist.

Danach wird die auf dem Träger fixierte Chromverbindung in der gleichen Suspension mit einer aluminiumorganischen Verbindung in Abwesenheit eines ungesättigten polymerisierbaren Kohlenwasserstoffs zur Reaktion gebracht.

Es zeigt sich, daß die aluminiumorganische Verbindung, die zur erfindungsgemäßen Herstellung der Katalysatorkomponente A eingesetzt wird, einen großen Einfluß auf die Wasserstoffansprechbarkeit und damit auf die Regelung des Molekulargewichtes ausübt.

Geeignete aluminiumorganische Verbindungen sind Aluminiumtrialkyle der Formel $AlR^4_3$ oder Aluminiumdialkylhydride

der Formel $AlR^{4}{}_{2}H$, in denen $R^4$ einen Alkylrest mit 1 bis 16, vorzugsweise 2 bis 4 Kohlenstoffatomen bedeutet, wie $Al(C_2H_5)_3$, $Al(C_2H_5)_2H$, $Al(C_3H_7)_2H$, $Al(i\text{-}C_4H_9)_2H$.

Weiterhin sind besonders geeignet Aluminiumverbindungen der Formel $R^4_2Al\text{-}OR^4$, in der $R^4$ die obengenannte Bedeutung hat, so zum Beispiel Diethyl-äthoxy-aluminium, Di-i-butyl-ethoxy-aluminium, Di-i-butyl-methoxy-aluminiu, Di-i-butyl-butoxy-aluminium. Bevorzugt verwendet wird Di-i-butyl-ethoxy-aluminium.

Verwendet werden können für diese Umsetzung auch polymere aluminiumorganische Verbindungen, die aus Einheiten der Formel

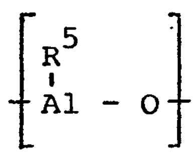

bestehen, worin $R^5$ eine Alkylgruppe mit 2 bis 18, vorzugsweise 4 bis 12 Kohlenstoffatomen bedeutet, z.B. Ethyl-, Propyl-, Isopropyl-, Butyl-, Isobutyl-, Pentyl-, Hexyl-, Isooctyl-, Dodecyl-. Diese Verbindungen sind erhältlich aus den entsprechenden Aluminiumtrialkylen, -dialkylhydriden und -alkyldihydriden durch vorsichtige Zugabe einer berechneten Menge Wasser zu deren Lösung in einem inerten Lösungsmittel, beispielsweise den gleichen, die vorstehend beschrieben wurden. Dabei trägt das Molverhältnis Wasser zu Aluminiumalkyl 0,5 bis 1,25 : 1, vorzugsweise 0,85 : 1 bis 1,05 : 1, die Reaktionstemperatur beträgt 0° bis 100°C, vorzugsweise etwa 10° bis 65°C. Die entstehenden Alkyl-Aluminiumoxide sind polymer. Bevorzugt verwendet wird eine Verbindung, die aus $Al(i\text{-}C_4H_9)_3$ und Wasser entsteht.

Schließlich sind geeignete aluminiumorganische Verbindungen auch die Umsetzungsprodukte von Aluminiumtrialkylen oder Aluminiumdialkylhydriden, die Alkylreste mit 1 bis 16 Kohlenstoffatomen enthalten, mit 4 bis 20 Kohlenstoffatomen

enthaltenden Dienen.

Von allen diesen aluminiumorganischen Verbindungen bevorzugt verwendet werden die Dialkylaluminiumalkoxide.

Die Umsetzung der auf dem Träger fixierten Chromverbindung mit der aluminiumorganischen Verbindung in Abwesenheit von ungesättigten polymerisierbaren Kohlenwasserstoffen, findet, wie schon ausgeführt, in demselben Lösungsmittel statt wie die Bildung des Chromatesters. Die Konzentration der Chromverbindung beträgt 1 bis 30, vorzugsweise 5 bis 20 mMol/l, das Verhältnis Cr zu Al 1 : 1 bis 1 : 50, vorzugsweise 1 : 2 bis 1 : 20. Die Reaktionstemperatur beträgt 0 bis 40°C, vorzugsweise 15 bis 25°C, die Reaktionszeit 1 bis 60 min, vorzugsweise 1 bis 10 min. Während der Umsetzung färbt sich das ursprünglich braune Trägermateria grün.

Die so erhaltene Katalysatorkomponente A wird entweder in Form der vorliegenden Suspension direkt, oder nach Entfernen des Lösungsmittels und Trocknen zusammen mit der Komponente B zur Polymerisation von 1-Olefinen verwendet.

Als Komponente B (= Aktivator) werden organische Verbindungen der Metalle der Hauptgruppe I, II, und III des Periodensystems verwendet. Vorzugsweise werden jedoch als Komponente B aluminiumorganische Verbindungen eingesetzt.

Neben den schon beschriebenen Aluminiumtrialkylen, Aluminiumdialkylhydriden, Poly(alkylaluminiumoxiden) und Umsetzungsprodukten von Aluminiumtrialkylen oder Aluminiumdialkylhydriden mit Dienen eignen sich als Komponente B auch chlorhaltige aluminiumorganische Verbindungen, wie Dialkylaluminiummonochloride der Formel $R^4{}_2AlCl$ oder Alkylaluminiumsesquichloride der Formel $R^4{}_3Al_2Cl_3$, worin $R^4$ einen Alkylrest mit 1 bis 16, vorzugsweise 2 bis 4 Kohlenstoffatomen bedeutet. Als Beispiele seien genannt:

$(C_2H_5)_2AlCl$, $(i\text{-}C_4H_9)_2AlCl$, $(C_2H_5)_3Al_2Cl_3$.

Bevorzugt verwendet werden hier polymere Verbindungen vom Typ $[\bar{R}-\overset{|}{A}l-\bar{O}]_n$, wie sie weiter vorn beschrieben wurden. Das Umsetzungsprodukt von Aluminiumtriisobutyl mit 0,5 bis 1,25 Mol $H_2O$ pro Mol $Al(i-C_4H_9)_3$ ist auch hier besonders bevorzugt.

Mit dem erfindungsgemäßen Katalysator wird mindestens ein 1-Olefin der Formel $R^6-CH=CH_2$ polymerisiert, worin $R^6$ Wasserstoff oder einen geradkettigen oder verzweigten Alkylrest mit 1 bis 10, vorzugsweise 1 bis 8 Kohlenstoffatomen, bedeutet. Beispielsweise seien Ethylen, Propylen, Buten-(1), Hexen-(1), 4-Methylpenten-(1), Octen-(1) genannt. Vorzugsweise wird Ethylen allein oder als Gemisch von mindestens 70 Gewichtsprozent Ethylen und maximal 30 Gewichtsprozent eines anderen 1-Olefins der obigen Formel polymerisiert. Insbesondere wird Ethylen allein oder ein Gemisch von mindestens 92 Gewichtsprozent Ethylen und maximal 8 Gewichtsprozent eines anderen 1-Olefins der obigen Formel polymerisiert.

Das Molekulargewicht des Polymers wird in bekannter Weise geregelt; vorzugsweise wird dazu Wasserstoff verwendet. Die Ansprechbarkeit des Katalysators kann durch die Auswahl der aluminiumorganischen Verbindungen bei der Herstellung der Komponente A variiert werden.

Die Polymerisation wird in Lösung, in Suspension oder in der Gasphase, kontinuierlich oder diskontinuierlich, bei einer Temperatur von 20 bis 150°C, vorzugsweise 60 bis 140°C, durchgeführt. Der Druck beträgt 0,5 bis 50 bar. Bevorzugt ist die Polymerisation in dem technisch besonders interessanten Druckbereich von 1 bis 40 bar.

Dabei wird die Chromverbindung (Komponente A) in einer Konzentration von 0,001 bis 1,5, vorzugsweise 0,005 bis 0,1 mMol Cr pro Liter Dispergiermittel bzw. Reaktorvolumen angewendet. Die metallorganische Verbindung wird in einer Konzentration von 0,5 bis 10 mMol, vorzugsweise 0,5 bis 6

mMol Al pro Liter Dispergiermittel bzw. pro Liter Reaktorvolumen verwendet. Prinzipiell sind aber auch höhere Konzentrationen möglich.

Die Suspensions- oder Lösungspolymerisation wird in einem der für das Ziegler-Niederdruckverfahren gebräuchlichen inerten Lösungsmittel durchgeführt, wie sie bereits weiter oben beschrieben wurden.

Ein besonderer Vorteil des erfindungsgemäßen Herstellungsverfahrens besteht darin, daß keine Waschlösungen anfallen, die wieder aufbereitet werden müßten.

Der erfindungsgemäße Katalysator liefert ein Polymeres mit breiter Molekulargewichtsverteilung in hoher Ausbeute, so daß auf eine Katalysatorentfernung verzichtet werden kann. Die Polymeren liefern Folien, die praktisch stippenfrei sind. Weiterhin sind die Polymeren äußerst lichtbeständig.

Ein weiterer Vorteil des erfindungsgemäßen Katalysators besteht darin, daß durch die Behandlung des auf dem Träger fixierten Chromatesters mit der aluminiumorganischen Verbindung in Abwesenheit eines ungesättigten polymerisierbaren Kohlenwasserstoffs die Ansprechbarkeit des Systems für Wasserstoff sehr stark erhöht wird und dadurch die Herstellung von gut verarbeitbaren Polymeren erleichtert wird.

<u>Beispiele 1 - 4</u>

In eine Lösung von 0,2964 g (4 mMol) t-Butanol in 150 ml wasserfreiem Hexan werden bei 20°C unter Ausschluß von Luft und Feuchtigkeit 3 g wasserfreies Magnesiumsulfat und danach 0,5 g (5 mMol) $CrO_3$ unter Rühren eingetragen. Anschließend rührt man die Suspension noch 20 min bei 20°C und filtriert sie sodann unter Schutzgasatmosphäre. Die rote Lösung von t-Butylchromat wird ohne weitere Reinigung für die nachfolgenden Operationen verwendet.

Eine Kieselsäure mit einer spezifischen Oberfläche von etwa 300 $m^2/g$ und einem Porenvolumen von 1,65 $cm^3/g$ und einer mittleren Teilchengröße von 100 µm wird 4 Stunden in einem Wirbelbett unter Argon bei 460°C getrocknet und unter Argon aufbewahrt.

26,5 g dieser Kieselsäure werden bei 20°C in 100 ml Hexan suspendiert und mit der Lösung von 2 mMol t-Butylchromat unter Rühren und Argon-Überlagerung versetzt. Anschließend werden 10 mMol Di-i-butyl-äthoxy-aluminium zugegeben. Nach 10 min Rühren bei 20°C wird der Ansatz im Vakuum-Rotationsverdampfer eingedampft. Die nunmehr vorliegende Komponente A wird für die folgenden Polymerisationsversuche verwendet.

0,5 Mol Aluminiumtriisobutyl werden in 374 ml einer hydrierten Dieselölfraktion (Kp 130 - 170°C) gelöst und unter starkem Rühren (Argonüberlagerung) bei 20°C tropfenweise mit 0,5 Mol Wasser versetzt. Die Temperatur wird durch Eiskühlung bei $20 \pm 5$°C gehalten. Man erhält auf diese Weise $[i\text{-}C_4H_9\text{-}\overset{|}{Al}\text{-}O\text{-}]_x$, die Komponente B.

In einem 1 l-Autoklaven werden 500 ml einer hydrierten Dieselölfraktion (Kp 130 - 170°C) vorgelegt, die Luft durch freimaliges Evakuieren und Aufdrücken von Wasserstoff verdrängt und der Autoklav auf 85°C erwärmt. Danach werden die in der Tabelle 1 angegebenen Mengen an Aktivator (Komponente B) und Katalysatorkomponente A zugegeben. Im Anschluß daran drückt man Wasserstoff bis zu einem Druck von 0,1 bar und Ethylen bis zu einem Druck von 6 bar auf und hält den Gesamtdruck von 6 bar während der vierstündigen Polymerisation durch Einleiten von Ethylen aufrecht. Danach wird das Polyethylenpulver durch Filtration vom Dispergiermittel abgetrennt und 18 h bei 70°C unter Vakuum getrocknet. Die Versuchsergebnisse sind in Tabelle 1 zusammengefaßt.

Beispiel 5 - 22

Zu einer Lösung von 0,85 g (3 mMol) Dimethylpentadecylcarbinol in 150 ml Hexan werden 3 g wasserfreies Magnesiumsulfat und 0,5 g Chromtrioxid (= 5 mMol) zugegeben und 5 Std. bei 0°C gerührt. Danach filtriert man das Magnesium sulfat und das überschüssige Chromtrioxid ab und fügt zu dem rotgefärbten Filtrat unter Rühren 24 g Kieselsäure mit einer Oberfläche von 300 $m^2$/g und einem Porenvolumen von 1,65 $cm^3$/g, die vorher 4 Std. bei 460°C getrocknet wurde, hinzu. Dann werden die in Tabelle 2 aufgeführten aluminiumorganischen Verbindungen in den angegebenen Mengen zugegeben und 10 min bei 20°C unter Argon gerührt. Anschließend wird der Ansatz im Vakuum-Rotationsverdampfer eingedampft (Ausnahme Beispiel 14). Die nunmehr vorliegende Katalysatorkomponente A wird für die folgenden Ethylenpolymerisationen eingesetzt.

In einem 1l-Autoklaven werden 500 ml einer hydrierten Dieselölfraktion (Kp 130 - 170°C) vorgelegt, die Luft durch dreimaliges Evakuieren und Aufdrücken von Wasserstoff verdrängt und der Autoklav auf 85°C erwärmt. Im Anschluß daran werden die in der Tabelle 2 angegebenen Mengen an Aktivator (Komponente B) und an Katalysatorkomponente A zugegeben. Danach drückt man Wasserstoff auf bis zu den in der Tabelle 2 angegebenen Drucken und Ethylen bis zu einem Gesamtdruck von 6 bar und hält den Gesamtdruck während den in der Tabelle 2 angegebenen Polymerisationszeiten durch Einleiten von thylen aufrecht. Danach wird das Polyethylenpulver durch Filtration vom Dispergiermittel abgetrennt und 18 h unter Vakuum getrocknet. Die Versuchsergebnisse sind in Tabelle 2 zusammengefaßt.

Beispiele 23 und 24

In der gleichen Weise, wie in den Beispielen 1 - 4 beschrieben, läßt man 2 mMol t-Butylchromat auf 109,6 g der gleichen Kieselsäure aufziehen (25°C) und danach mit

20 mMol Di-i-butyl-ethoxy-aluminium reagieren. Durch Eindampfen im Vakuum-Rotationsverdampfer wird die feste Katalysatorkomponente A gewonnen.

Die Polymerisation wird in einem 2 l-Autoklaven vorgenommen, welcher mit 1000 ml einer hydrierten Dieselölfraktion (Kp 130 - 170°C) beschickt, von Luft befreit und auf 85°C erwärmt wird. Sodann wird die Komponente B ($[i\text{-}C_4H_9\text{-}\overset{|}{Al}\text{-}O]_x$), hergestellt aus $Al(i\text{-}C_4H_9)_3$ und Wasser wie in Beispiel 1 - 22 beschrieben, und Katalysatorkomponente A in den in der Tabelle 3 angegebenen Mengen zugefügt. Darauf drückt man Wasserstoff auf bis zu einem Druck von 1 bar und Ethylen bis zu einem Druck von 20 bar und hält während der Polymerisation den Gesamtdruck von 20 bar durch Nachdrücken von Ethylen aufrecht. Nach den in Tabelle 3 angegebenen Polymerisationszeiten entspannt man den Autoklaven und trennt das Polyethylenpulver durch Filtration vom Dispergiermittel. Trocknung 18 Stunden bei 70°C im Vakuum. Die Ergebnisse sind in Tabelle 3 zusammengefaßt.

Beispiele 25 bis 28

Eine Kieselsäure mit einer Teilchengröße von weniger als 32 µm, einer Oberfläche von 500 $m^2/g$ und einem Porenvolumen von 2,69 ml/g wird mit t-Butylchromat beladen, wobei man in 300 ml Hexan 2 mMol der Chromverbindung auf 8,5 g Kieselsäure aufziehen läßt. Danach fügt man zu der Suspension 20 mMol Di-i-butyl-ethoxy-aluminium hinzu. Die durch Eindampfen im Vakuum-Rotationsverdampfer gewonnene Katalysatorkomponente A wird für die folgenden Polymerisationsversuche verwendet, die im gleichen Autoklaven in der gleichen Dispergiermittelmenge wie in den Beispielen 23 und 24 durchgeführt werden. Auch der Aktivator (Komponente B) und die Polymerisationstemperatur sind die gleichen. Die Wasserstoff- und Ethylen-Partialdrucke und Polymerisationszeiten sowie die Ergebnisse sind in der Tabelle 4 zusammengefaßt.

Beispiel 29

Eine Kieselsäure mit einer spezifischen Oberfläche von etwa 300 $m^2/g$, einem Porenvolumen von 1,65 $cm^3/g$ und einer mittleren Teilchengröße von 100 µm wird 4 Stunden in einem Wirbelblatt unter Argon bei 460°C getrocknet und unter Argon aufbewahrt.

Von dieser Kieselsäure werden bei 20°C 6 g unter Rühren in 50 ml Hexan suspendiert und mit 0,5 mMol t-Butylchromat in 150 ml Hexan versetzt. Danach werden 2,5 mMol Di-i-butyläthoxy-aluminium hinzugefügt und der Ansatz noch 10 min gerührt. Man erhält so die Katalysatorkomponente A.

Für die Polymerisation wird ein 200 l-Kessel mit 100 l einer hydrierten Dieselölfraktion (Kp 130 - 170°C) beschickt, durch Spülen mit Stickstoff von Luft befreit und auf 85°C aufgeheizt. Sodann werden 0,75 Mol des auch in den Beispielen 1 bis 4 verwendeten Poly-i-butylaluminiumoxids und die Katalysatorkomponente A in Form der obengenannten Suspension eingeführt. Man leitet Ethylen ein und soviel Wasserstoff, daß der Wasserstoffanteil im Gasraum 8,5 % beträgt bei einem Gesamtdruck von 6 bar. Durch fortlaufendes Nachdrücken von Ethylen wird dieser Druck aufrechterhalten. Nach 8 Stunden Polymerisationszeit entspannt man den Autoklaven, trennt das Polymere durch Filtration vom Dispergiermittel und trocknet das Polyäthylen bei 70°C 24 h im Vakuum.

Die Ausbeute beträgt 32 500 g, das entspricht 8125 g Polyethylen/mMol Cr · h.

0004533

RSV 2,98 dl/g

MFI 190/5 0,53 g/10 min

MFI 190/15 6,5 g/10 min

$$\frac{\text{MFI 190/15}}{\text{MFR 190/ 5}} = 12{,}3$$

$$\frac{\bar{M}w}{\bar{M}n} = 10{,}7$$

Vergleichsbeispiel A

Die Verfahrensweise der Beispiele 25 bis 28 wird wiederholt, jedoch unterbleibt die Behandlung des auf der Kieselsäure fixierten t-Butychromats mit Di-i-butyl-äthoxyaluminium. Man erhält mittels 0,1354 g (0,0319 mMol) chromhaltigem Träger und 5 mMol Aktivator in 3 Stunden bei einem Wasserstoffdruck von 1 bar und einem Ethylendruck von 19,0 bar 3230 g PE/mMolCr · h mit einem Schmelzindex MFI 190/5 von 0,01 g/10 min. Das Produkt läßt sich nur schwer verarbeiten.

Tabelle 1

| Beispiel | Katalysatorkomponente A g | mMol Cr | Komponente B Aktivator | mMol | Ausbeute g PE/mMolCr·h |
|---|---|---|---|---|---|
| 1 | 0,2941 | 0,0222 | $Al(C_2H_5)_3$ | 3 | 79 |
| 2 | 0,1663 | 0,0125 | $Al(i\text{-}C_4H_9)_3$ | 5 | 114 |
| 3 | 0,2350 | 0,0177 | Al-isoprenyl | 3 | 319 |
| 4 | 0,2251 | 0,0170 | $[i\text{-}C_4H_9\text{-}Al\text{-}O]_x$ | | 4503 |

TABELLE 2

| Beispiel | 4) | Komponente A SiO$_2$ g | Komp.A | Cr mMol | Komponente B (Aktivator) $[i\text{-}C_4H_9\text{-}Al\text{-}O\text{-}]_x$ mMol | $H_2$ bar | $C_2H_4$ bar | Polym. zeit h | Ausbeute g | gPE/mMol Cr·h | MFI 190/5 g/10 min |
|---|---|---|---|---|---|---|---|---|---|---|---|
| 5 | a | 25,5 | 0,400 | 0,0235 | 20 | 2 | 4 | 2 | 216 | 4 590 | 1,07 |
| 6 | | | 0,3716 | 0,0219 | 20 | 1,5 | 4,5 | 4 | 152 | 1 738 | 0,68 |
| 7 | | | 0,3106 | 0,0183 | 20 | 0,5 | 5,5 | 4 | 166 | 2 271 | 0,48 |
| 8 | b | 22,5 | 0,400 | 0,0267 | 20 | 2 | 4 | 3 | 195 | 2 437 | 0,21 |
| 9 | c | 22,6 | 0,3047 | 0,0202 | 20 | 2 | 4 | 4 | 168 | 2 077 | 15,91 |
| 10 | d | 24,1 | 0,3659 | 0,0228 | 15 | 2 | 4 | 4 | 118 | 1 295 | 8,78 |
| 11 | e | 24,1 | 0,3949 | 0,0246 | 20 | 2 | 4 | 4 | 176 | 1 790 | 18,10 |
| 12 | | | 0,3975 | 0,0247 | 25 | 1 | 5 | 3 | 180 | 2 425 | 9,18 |
| 13 | | | 0,2625 | 0,0164 | 20 | 0 | 6 | 4 | 181 | 2 770 | 0,18 |
| 14 | 1) | | | 0,0250 | 25 | 2 | 4 | 4 | 197 | 1 970 | 21,80 |
| 15 | f | 24,3 | 0,4869 | 0,0301 | 20 | 2 | 4 | 4 | 176 | 1 464 | 1,40 |
| 16 | g | 24,0 | 0,3312 | 0,0207 | 15 | 2 | 4 | 3 | 149 | 2 399 | 6,24 |
| 17 | | | 0,2065 | 0,0129 | 20 | 0,5 | 5,5 | 3 | 174 | 4 494 | 1,91 |
| 18 | | | 0,2373 | 0,0148 | 20 | 1 | 5 | 4 | 197 | 3 321 | 3,35 |
| 19 | h | 24,0 | 0,2393 | 0,0150 | 20 | 2 | 4 | 4 | 48 | 0 802 | 3,72 |
| 20 | i | 24,0 | 0,2129 | 0,0133 | 20 | 2 | 4 | 4 | 69 | 1 296 | 6,14 |
| 21 | b | 22,5 | 0,4102 | 0,0273 | 20 2) | Keine Polymerisation | | | | | |
| 22 | e | 24,1 | 0,2510 | 0,0156 | 20 2) | Keine Polymerisation | | | | | |

Zu Tabelle 2

a = 1,5 mMol DMPDC[3)] + 10 mMol $Al(i-C_4H_9)_3$

b = 1,5 mMol DMPDC + 40 mMol $[i-C_4H_9-Al-O-]_x$

c = 1,5 mMol DMPDC + 20 mMol $(C_2H_5)_2Al-O-C_2H_5$

d = 1,5 mMol DMPDC + 20 mMol $[Al(i-C_4H_9)_3$ + 10 mMol $H_2O$ + 20 mMol $C_2H_5OH]$

e = 1,5 mMol DMPDC + 20 mMol $(i-C_4H_9)_2Al-O-C_2H_5$

f = 1,5 mMol DMPDC + 20 mMol $(i-C_4H_9)_2Al-O-C(CH_3)_2(CH_2)_{14}\cdot CH_3$

g = 1,5 mMol DMPDC + 20 mMol $(C_2H_5)_2Al-OCH_3$

h = 1,5 mMol DMPDC + 20 mMol $(i-C_4H_9)_2Al-O-iC_4H_9$

i = 1,5 mMol DMPDC + 20 mMol $(i-C_4H_9)_2Al-OCH_3$

1) als Dispersion eingesetzt

2) $(i-C_4H_9)_2Al-O-C_2H_5$

3) DMPDC = $[CH_3-(CH_2)_{14}\cdot C(CH_3)_2-O]_2CrO_2$

4) Vorbehandlung

Tabelle 3

| Beispiel | Katalysatorkomponente A g | Katalysatorkomponente A mMolCr | Komponente B Aktivator mMol | Polym. Zeit h | Ausbeute g PE/mMolCr.h | MFI 190/5 g/10 min | MFI 190/15 g/ 10 min | MFI 190/15 / MFI 190/ 5 |
|---|---|---|---|---|---|---|---|---|
| 23 | 0,1867 | 0,0034 | 10 | 3,5 | 29 438 | 0,29 | 3,3 | 11,4 |
| 24 | 0,0821 | 0,0015 | 5 | 8 | 18 272 | 0,27 | 3,1 | 11,5 |

Tabelle 4

| Beispiel | Katalysatorkomponente A g | Katalysatorkomponente A mMolCr | Komponente B Aktivator mMol | Polym. Zeit h | $H_2$ bar | $C_2H_4$ bar | Ausbeute g PE/mMol Cr·h | MFI 190/5 g/10 min | MFI 190/15 g/10 min | MFI 190/15 / MFI 190/ 5 |
|---|---|---|---|---|---|---|---|---|---|---|
| 25 | 0,2510 | 0,0593 | 5 | 2 | 0,5 | 9,5 | 2 724 | 1,27 | 11,4 | 9,0 |
| 26 | 0,1148 | 0,0271 | 5 | 2 | 1,0 | 19,0 | 4 517 | 0,65 | 6,2 | 9,6 |
| 27 | 0,2787 | 0,0658 | 5 | 3 | 0,5 | 9,5 | 2 015 | 1,05 | 9,48 | 9,0 |
| 28 | 0,1340 | 0,0316 | 5 | 3 | 1,0 | 19,0 | 3 433 | 0,56 | 5,58 | 9,9 |

Patentansprüche:

1. Verfahren zur Herstellung eines Katalysators durch Aufbringen eines Chromatesters auf einen Siliciumdioxid enthaltenden Träger, Behandeln der auf dem Träger fixierten Chromverbindung mit einer reduzierenden Verbindung und Mischen des Reaktionsproduktes (Komponente A) mit einer aluminiumorganischen Verbindung (Komponente B), dadurch gekennzeichnet, daß man zur Herstellung der Komponente A einen Chromatester der Formel $(RO)_2CrO_2$, worin R eine tertiäre Alkyl- oder Aralkylgruppe mit 4 bis 24 Kohlenstoffatomen bedeutet, auf ein Oxid oder Mischoxid des Siliciums und/oder Aluminiums aufbringt und in Abwesenheit eines ungesättigten polymerisierbaren Kohlenwasserstoffes mit einer Verbindung aus der Gruppe der Aluminiumtrialkyle, Aluminiumdialkylhydride, Aluminiumdialkylalkoxide, Umsetzungsprodukte von Aluminiumtrialkylen oder Aluminiumdialkylhydriden mit Dienen sowie Poly-alkyl-aluminiumoxide im Verhältnis Cr:Al von 1:1 bis 1:50 behandelt.

2. Katalysator, hergestellt nach dem Verfahren gemäß Anspruch 1.

3. Verwendung des Katalysators, hergestellt nach dem Verfahren gemäß Anspruch 1, zum Polymerisieren von 1-Olefinen der Formel $R^6-CH=CH_2$, worin $R^6$ Wasserstoff oder einen geradkettigen oder verzweigten Alkylrest mit 1 bis 10 Kohlenstoffatomen bedeutet.

4. Verfahren zur Herstellung eines Polyolefins durch Polymerisieren von mindestens einem 1-Olefin der Formel $R^6-CH=CH_2$, worin $R^6$ Wasserstoff oder einen geradkettigen oder verzweigten Alkylrest mit 1 bis 10 Kohlenstoffatomen bedeutet, in Gegenwart eines Katalysators, welcher entstanden ist durch Aufbringen eines Chromatesters auf einen Siliciumdioxid enthaltenden Träger,

Behandeln der auf dem Träger fixierten Chromverbindung mit einer reduzierenden Verbindung und Mischen des Reaktionsproduktes (Komponente A) mit einer aluminiumorganischen Verbindung (Komponente B), dadurch gekennzeichnet, daß man die Polymerisation in Gegenwart eines Katalysators durchführt, dessen Komponente A in der Weise hergestellt wurde, daß man einen Chromatester der Formel $(RO)_2CrO_2$, worin R eine tertiäre Alkyl- oder Aralkylgruppe mit 4 bis 24 Kohlenstoffatomen bedeutet, auf ein Oxid oder Mischoxid des Siliciums und/oder Aluminiums aufbrachte und in Abwesenheit eines ungesättigten polymerisierbaren Kohlenwasserstoffes mit einer Verbindung aus der Gruppe der Aluminiumtrialkyle, Aluminiumdialkylhydride, Aluminiumdialkylalkoxide, Umsetzungsprodukte von Aluminiumtrialkylen oder Aluminiumdialkylhydriden mit Dienen sowie Polyalkylaluminiumoxide im Verhältnis Cr:Al von 1:1 bis 1:50 behandelte.